# EUROPEAN PATENT APPLICATION

(11) **EP 3 163 031 A1**
(43) Date of publication of application: **03.05.2017**
(21) Application number: 16193792.5
(22) Date of filing: 13.10.2016
(51) Int. Cl.: F01D 17/16, F16C 3/10, F16C 3/22

(54) **CRANKED SHAFT WITH CRANKS TO CONTROL A VARIABLE VANE ASSEMBLY**

(30) Priority: 16.10.2015 US 201514885199
(71) Applicant: General Electric Company, Schenectady, NY 12345 (US)
(72) Inventor: EREMIA, Liviu Viorel, Greenville, SC 29615 (US)
(74) Representative: Illingworth-Law, William Illingworth

(57) **Abstract**

There is provided a shaft assembly (200) for movement of a plurality of adjustable members. The shaft assembly comprises: an elongate shaft body (210) having: a first end (212) and a second end (214). A first portion (216) of the shaft assembly (200) is oriented substantially along a longitudinal axis (L, L) of the elongate shaft body (210). A second portion (218) of the shaft assembly (200) is oriented substantially parallel to and radially displaced from the longitudinal axis (L.,L) of the elongate shaft body (210). A plurality of crank-like attachment devices (220, 222, 224, 226) are disposed along an outer surface of the first portion (216) and the second portion (218) of the elongate shaft body (210).

## Description

### BACKGROUND

Embodiments of the disclosure relate generally to shaft devices and, more particularly, to a shaft device having at least one portion that is radially distanced from a longitudinal axis of the shaft device.

### SUMMARY OF THE INVENTION

A first aspect of the disclosure provides a shaft assembly for movement of a plurality of adjustable members, the shaft assembly comprising: an elongate shaft body having: a first end; a second end; a first portion oriented substantially along a longitudinal axis of the elongate shaft body; and a second portion oriented substantially parallel to and radially displaced from the longitudinal axis of the elongate shaft body; and a plurality of attachment devices disposed along an outer surface of the elongate shaft body.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a perspective view of a shaft device;
FIG. 2 is a perspective view of a shaft device according to one embodiment of the invention;
FIG. 3 is a perspective view of a shaft device according to another embodiment of the invention.
FIG. 4 is a side view of an attachment device according to an embodiment of the invention;
FIG. 5 is a top view of the attachment device of FIG. 4 in conjunction with components of a stepped shaft device according to an embodiment of the invention;
FIG. 6 is a side view of an attachment device according to another embodiment of the invention; and
FIG. 7 is a top view of the attachment device of FIG. 6 in conjunction with components of a stepped shaft device according to another embodiment of the invention.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION

Shaft-like devices are commonly used to provide rotational control of arrays of vanes in compressors and gas turbines. Typically, such a device comprises an elongate member having a plurality of attachment devices along its length, to each of which an actuator rod or control rod may be connected.

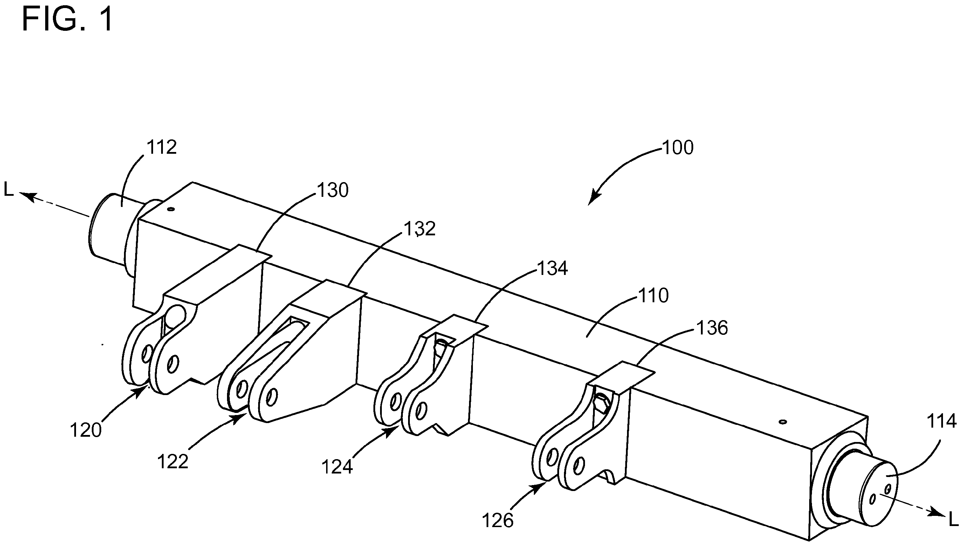

FIG. 1 shows a perspective view of a device 100, with an elongate shaft 110 having a first end 112 and a second end 114. Each of the first and second ends 112, 114 is typically mounted on bearings to facilitate rotation of elongate shaft 110. A plurality of attachment devices 120, 122, 124, 126 are fastened along elongate shaft 110 and to which may be attached, for example, a control rod, which may then be used to control a variable vane of a stage of a gas turbine.

Attachment devices 120, 122, 124, 126 extend from elongate shaft 110 and from its longitudinal axis L to varying degrees, as a consequence of their intended function in controlling, for example, variable vanes of a gas turbine. The varying radial lengths of the attachment devices 120, 122, 124, 126 with respect to elongate shaft 110 impart high stresses, particularly at those attachment devices extending furthest from elongate shaft 110. This requires the use of higher strength materials for elongate shaft 110 and attachment devices 120, 122, 124, 126.

In addition, attachment devices 120, 122, 124, 126 are typically fitted into a flanged joint 130, 132, 134, 136 along the length of elongate shaft 110. This, however, requires some fastening apparatus or method to fix, for example, attachment device 120 within flanged joint 130. Such apparatuses and methods often include, for example, threaded bolts, bonding, brazing, welding, etc., each of which increases the complexity and expense of manufacturing known shaft-like devices.

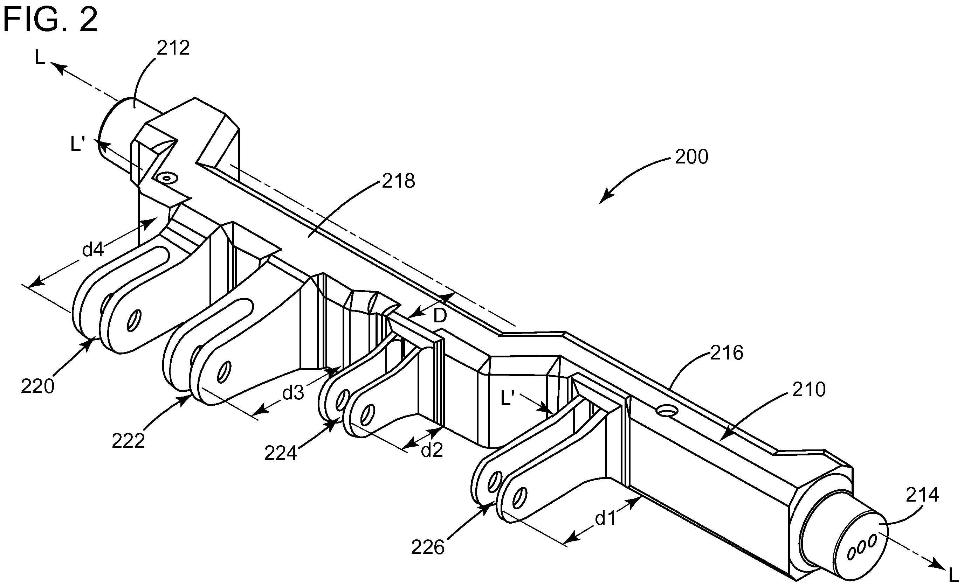

FIG. 2 shows a perspective view of a stepped shaft assembly 200 according to one embodiment of the invention. Stepped shaft assembly 200 includes an elongate shaft body 210 with a first end 212 and a second end 214. However, unlike the known device of FIG. 1, elongate shaft body 210 includes a first portion 216 oriented substantially along a longitudinal axis L of the elongate shaft body 210 (i.e., a longitudinal axis extending through first and second ends 212, 214) and a second portion 218 oriented substantially parallel to and radially displaced to a distance D from the longitudinal axis L of the elongate shaft body 210. That is, second portion 218 includes a second longitudinal axis L' radially displaced from longitudinal axis L.

A plurality of attachment devices 220, 222, 224, 226 is disposed along elongate shaft body 210. Each attachment device 220, 222, 224, 226 extends from either first portion 216 or second portion 218 to a distance d₁, d₂, d₃, d₄, respectively. The radial displacement of second portion 218 of elongate shaft body 210 from the longitudinal axis L permits the use of shorter attachment devices 220, 222, 224 along second portion 218. That is, attachment devices 220, 222, 224 extend radially from second portion 218 (and from longitudinal axis L) to distances d₂, d₃, d₄, respectively, which is a lesser distance than if second portion 218 was oriented substantially along longitudinal axis L.

The use of shorter attachment devices 220, 222, 224 reduces the load path and the stresses to which attachment devices 220, 222, 224 are exposed. As a consequence, stepped shaft assembly 200 may be formed from less expensive, lower-strength materials than may be known devices. In addition, elongate shaft body 210 and attachment devices 220, 222, 224 may be forged or cast as a single unit. That is, attachment devices 220, 222, 224 may be structurally integrated into elongate shaft body 210 during the manufacturing process, obviating the need for joints into which attachment devices are inserted and into which the attachment devices must be fastened.

In other embodiments of the invention, a stepped shaft device may include more than one "stepped" portions radially displaced from the longitudinal axis of the elongate shaft body, each of the "stepped" portions being displaced to a different degree. Such an embodiment may be desirable where, for example, the extent of displacement is intended to be proportional to the lengths of the attachment devices that would otherwise be employed. In such an embodiment, attachment devices may be disposed along the lengths of any or each of the "stepped" portions.

Materials from which stepped shaft assembly 200 may be formed include, for example, A514 steel, 2.25 Cr - 1 Mo steel, and carbon steel. Any such material may optionally include a coating or protectant, such as a rust protectant. Other suitable materials and other methods of forming stepped shaft assembly 200 will be apparent to one skilled in the art and are within the scope of the invention.

In some cases, it has been found that the use of a stepped shaft assembly according to embodiments of the invention has resulted in between about a 35% and a 40% reduction in stresses at the attachment devices. At the same time, the total amount of material used in the cast stepped shaft assembly of FIG. 2 has been found to be reduced by between about 25% and about 30%.

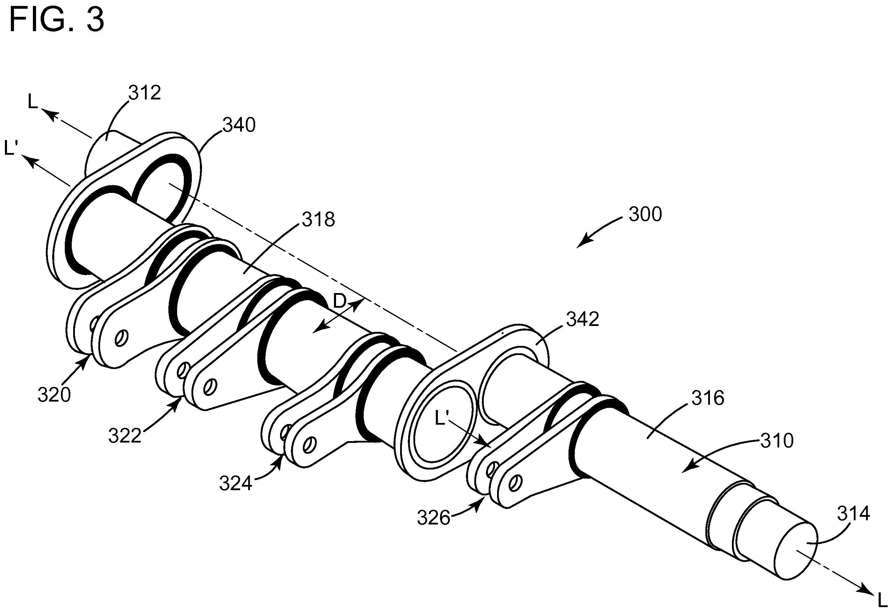

FIG. 3 shows a perspective view of a stepped shaft assembly 300 according to another embodiment of the disclosure. Here, rather than a singular cast body, stepped shaft assembly 300 comprises a welded or otherwise joined or fused configuration made up of a first cylindrical member 316 and a second cylindrical member 318. A first plate member 340 joins second cylindrical member 318 to a first end 312 and a second plate member 342 joins first cylindrical member 316 and second cylindrical member 318.

As can be seen in FIG. 3, second cylindrical member 318 is laterally displaced from the longitudinal axis L of stepped shaft assembly 300 to distance D by first plate member 340 and second plate member 342. That is, a second longitudinal axis L' of second cylindrical member 318 is radially displaced to distance D from longitudinal axis L extending through first and second ends 312, 314. Functionally, this is similar to the embodiment shown in FIG. 2, resulting in decreased stresses at attachment devices 320, 322, 324. Also similar to the embodiment of FIG. 2, therefore, stepped shaft assembly 300 may be formed from less expensive, lower-strength materials than may be known devices.

Attachment devices 320, 322, 324, 326 may be affixed to first cylindrical member 316 or second cylindrical member 318 in any of a number of ways. As shown in FIG. 3, attachment devices 320, 322, 324, 326 comprise a pair of adjacent, similarly-sized and similarly-shaped arms. These arms may, for example, be sized to slide over the exterior surface of first or second cylindrical member 316, 318 and welded or otherwise fixed in place. Alternatively, each of first and second cylindrical members 316, 318 may be made up of a plurality of shorter lengths which are affixed to and joined by attachment devices 320, 322, 324, 326.

In some embodiments of the invention, cylindrical members 316, 318 may be solid in cross-section. In other embodiments, cylindrical members 316, 318 may be tubular, i.e., hollow in cross-section. In embodiments in which cylindrical members 316, 318 are tubular, ends 312, 314 may be inserted into first plate member 340 and first cylindrical member 316, respectively.

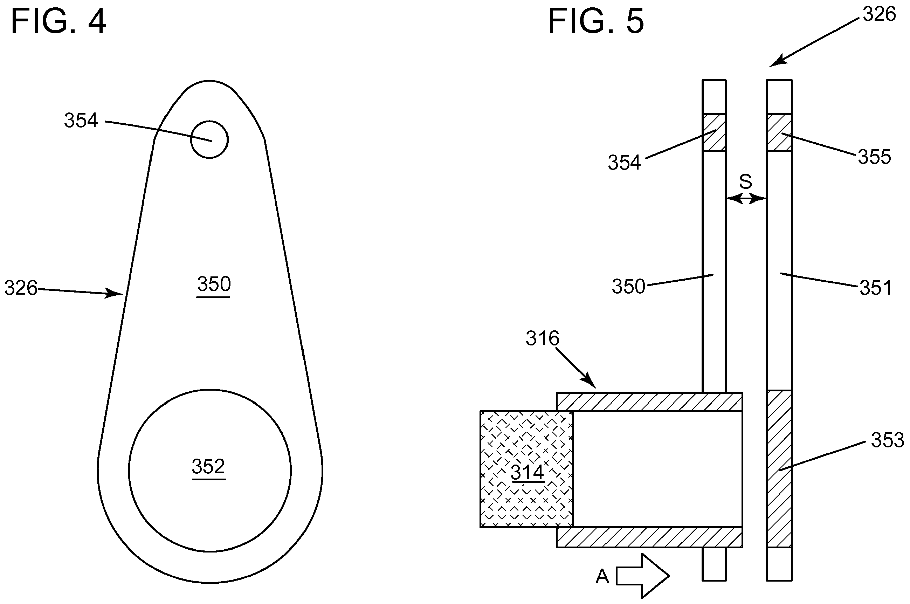

FIG. 4 shows a side view of attachment device 326 of FIG. 3. As can be seen, attachment device includes a body 350 having a first aperture 352 and a second aperture 354. First aperture 352 is sized and shaped to accommodate first cylindrical member 316. Second aperture 354 is sized and shaped to accommodate a device for securing, for example, a control rod, as discussed above. Apertures 352, 354 are shown as substantially circular, but may be of any shape compatible with, respectively, first cylindrical member 316 and the device for securing, for example, the control rod.

FIG. 5 shows a top view of attachment device 326, which can be seen as comprising a pair of bodies 350, 351, a pair of first apertures 352 (FIG. 4; obscured in FIG. 5), 354, and a pair of second apertures 354, 355, each aligned to accommodate passage of first cylindrical member 316 through first apertures 352, 353 along path A. Bodies 350, 351 are separated by a space S, such that, in place along either first or second cylindrical members 316, 318, bodies 350, 351 are spaced along or parallel to the longitudinal axis L (FIG. 3). As also shown in FIG. 5, first cylindrical member 316 is tubular, having an internal dimension sized to accept second end 314, which may be solid rather than tubular.

Once first cylindrical member 316 is passed through both first apertures 352, 353, attachment device 326 may be fixed to first cylindrical member 316 by, for example, welding. Similarly, once second end 314 is passed into first cylindrical member 316 to the extent desired, second end 314 and first cylindrical member 316 may be fixed together by, for example, welding.

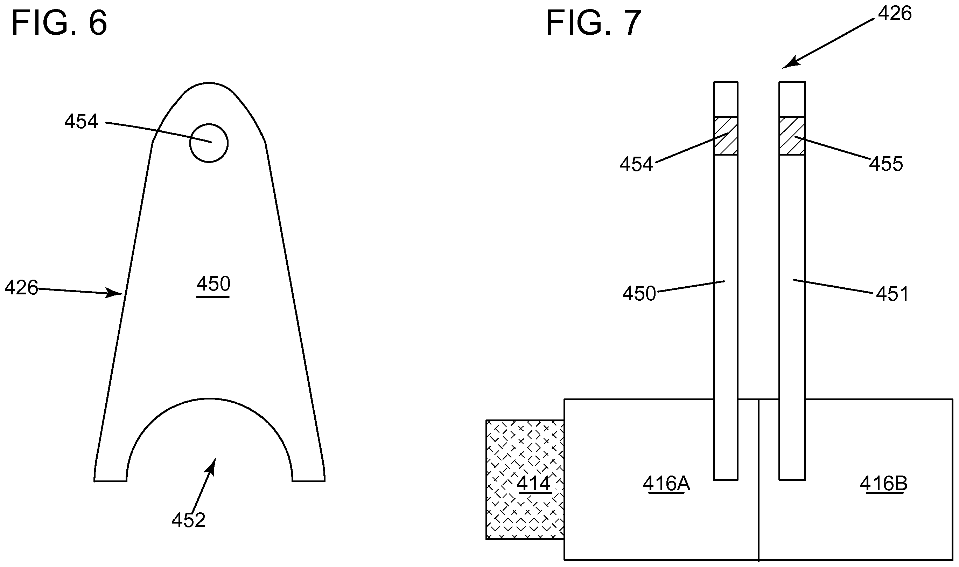

FIGS. 6 and 7 show, respectively, side and top views of an attachment device 426 according to another embodiment of the invention briefly described above. Referring to FIG. 6, the body 450 of attachment device 426 is truncated as compared to the embodiment of FIG. 4. Here, aperture 452 is substantially semi-circular rather than circular, as in FIG. 4.

FIG. 7 shows a top view of attachment device 426 in conjunction with two segments 416A, 416B of first cylindrical member 416 (FIG. 4). Here, segments 416A, 416B may effectively be joined, at least in part, by joining (via welding, etc.) body 450 to first segment 416A and by joining body 451 to second segment 416B. Segments 416A, 416B may optionally be directly joined as well, via welding, etc.

In still another embodiment of the invention, an attachment device such as attachment device 426 may be used in combination with an unsegmented cylindrical member, such as first cylindrical member 316 (FIGS. 3 and 5), with the bodies of such attachment devices joined to the unsegmented cylindrical member.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following numbered clauses:
1. A shaft assembly for movement of a plurality of adjustable members, the shaft assembly comprising:
   an elongate shaft body having:
      a first end;
      a second end;
      a first portion oriented substantially along a longitudinal axis of the elongate shaft body; and
      a second portion oriented substantially parallel to and radially displaced from the longitudinal axis of the elongate shaft body; and
   a plurality of attachment devices disposed along an outer surface of the elongate shaft body.
2. The shaft assembly of clause 1, wherein each of the first end and the second end of the elongate shaft body lies substantially along the longitudinal axis.
3. The shaft assembly of clause 1 or clause 2, wherein a first of the plurality of attachment devices is disposed on the first portion of the elongate shaft body and a second of the plurality of attachment devices is disposed on the second portion of the elongate shaft body.
4. The shaft assembly of any preceding clause, wherein at least one of the plurality of attachment devices is adapted for attachment to an actuator rod for moving the elongate shaft body.
5. The shaft assembly of any preceding clause, wherein the at least one of the plurality of attachment devices is disposed along the second portion of the elongate shaft body.
6. The shaft assembly of any preceding clause, further comprising:
   a third portion of the elongate shaft body,
   wherein the second portion is radially displaced from the longitudinal axis to a first distance and the third portion is radially displaced from the longitudinal axis to a second distance that is less than the first distance.
7. The shaft assembly of any preceding clause, wherein a first of the plurality of attachment devices is disposed on the first portion of the elongate shaft body, a second of the plurality of attachment devices is disposed on the second portion of the elongate shaft body, and a third of the plurality of attachment devices is disposed on the third portion of the elongate shaft body.
8. The shaft assembly of any preceding clause, wherein each of the first portion and the second portion of the elongate shaft member comprises a substantially tubular member having a first end and a second end.
9. The shaft assembly of any preceding clause, further comprising:
   a first plate member disposed between the first portion and the second portion and to which each of a first end of the first portion and a second end of the second portion is attached.
10. The shaft assembly of any preceding clause, further comprising:
   a second plate member disposed between the first end of the elongate shaft body and the second portion and to which each of the first end of the elongate shaft body and a first end of the second portion is attached.
11. The shaft assembly of any preceding clause, wherein at least one of the plurality of attachment devices includes:
   a body extending radially from the outer surface of the elongate shaft body; and
   an aperture through at least a portion of the body, the aperture oriented substantially parallel to the longitudinal axis of the elongate shaft body.
12. The shaft assembly of any preceding clause, wherein the body includes a first member and a second member laterally separated along the outer surface of the elongate shaft body and the passage passes through both the first member and the second member.
13. The shaft assembly of any preceding clause, wherein:
   a first of the plurality of attachment devices is disposed along the first portion of the elongate shaft body, the body of the first of the plurality of attachment devices extending radially from the outer surface of the first portion to a first distance; and
   a second of the plurality of attachment devices is disposed along the second portion of the elongate shaft body, the body of the second of the plurality of attachment devices extending radially from the outer surface of the second portion to a second distance that is less than the first distance.
14. The shaft assembly of any preceding clause, wherein the body of the first of the plurality of attachment devices and the body of the second of the plurality of attachment devices extend radially from the longitudinal axis to substantially the same distance.
15. The shaft assembly of any preceding clause, wherein the first portion and the second portion of the elongate shaft member comprise a plurality of segmented tubular members.
16. The shaft assembly of any preceding clause, wherein at least one of the plurality of attachment devices includes:
   a body extending radially from the outer surface of the elongate shaft body; and
   an aperture through at least a portion of the body, the aperture oriented substantially parallel to the longitudinal axis of the elongate shaft body.
17. The shaft assembly of any preceding clause, wherein the aperture is substantially circular.
18. The shaft assembly of any preceding clause, wherein the aperture is substantially semi-circular
19. The shaft assembly of any preceding clause, wherein at least one of the attachment devices is joined to both a first and a second of the plurality of segmented tubular members.
20. The shaft assembly of any preceding clause, wherein the first of the plurality of segmented tubular members is joined to the second of the plurality of segmented tubular members.

## Claims

1. A shaft assembly for movement of a plurality of adjustable members, the shaft assembly comprising:
an elongate shaft body (210) having:
a first end (212);
a second end (214);
a first portion (216) oriented substantially along a longitudinal axis of the elongate shaft body (210); and
a second portion (218) oriented substantially parallel to and radially displaced from the longitudinal axis of the elongate shaft body (210); and
a plurality of attachment devices (220, 222, 224, 226) disposed along an outer surface of the elongate shaft body (210).

2. The shaft assembly of claim 1, wherein each of the first end (212) and the second end (214) of the elongate shaft body (210) lies substantially along the longitudinal axis.

3. The shaft assembly of claim 1 or claim 2, wherein a first of the plurality of attachment devices (220, 222, 224, 226) is disposed on the first portion (216) of the elongate shaft body (210) and a second of the plurality of attachment devices (220, 222, 224, 226) is disposed on the second portion (218) of the elongate shaft body (210).

4. The shaft assembly of any preceding claim, wherein at least one of the plurality of attachment devices (220, 222, 224, 226) is adapted for attachment to an actuator rod for moving the elongate shaft body (210).

5. The shaft assembly of any preceding claim, wherein the at least one of the plurality of attachment devices (220, 222, 224) is disposed along the second portion (218) of the elongate shaft body (210).

6. The shaft assembly of any preceding claim, further comprising:
a third portion of the elongate shaft body,
wherein the second portion is radially displaced from the longitudinal axis to a first distance and the third portion is radially displaced from the longitudinal axis to a second distance that is less than the first distance.

7. The shaft assembly of any preceding claim, wherein a first of the plurality of attachment devices is disposed on the first portion of the elongate shaft body, a second of the plurality of attachment devices is disposed on the second portion of the elongate shaft body, and a third of the plurality of attachment devices is disposed on the third portion of the elongate shaft body.

8. The shaft assembly of any preceding claim, wherein each of the first portion (316) and the second portion (318) of the elongate shaft (310) member comprises a substantially tubular member having a first end and a second end.

9. The shaft assembly of any preceding claim, further comprising:
a first plate member (342) disposed between the first portion (316) and the second portion (318) and to which each of a first end of the first portion (316) and a second end of the second portion (318) is attached.

10. The shaft assembly of any preceding claim, further comprising:
a second plate member (340) disposed between the first end (312) of the elongate shaft body (310) and the second portion (318) and to which each of the first end (312) of the elongate shaft body (310) and a first end of the second portion (318) is attached.

11. The shaft assembly of claim 1, wherein at least one of the plurality of attachment devices (326) includes:
a body (350) extending radially from the outer surface of the elongate shaft body (310); and
an aperture (352) through at least a portion of the body (350), the aperture (352) oriented substantially parallel to the longitudinal axis of the elongate shaft body (310).

12. The shaft assembly of any preceding claim, wherein the body (350) includes a first member and a second member laterally separated along the outer surface of the elongate shaft body (310) and the aperture (352, 353) passes through both the first member and the second member.

13. The shaft assembly of any preceding claim, wherein:
a first of the plurality of attachment devices (226) is disposed along the first portion (216) of the elongate shaft body (210), the body (350) of the first of the plurality of attachment devices (226) extending radially from the outer surface of the first portion (216) to a first distance; and
a second of the plurality of attachment devices (224) is disposed along the second portion (218) of the elongate shaft body (210), the body (350) of the second of the plurality of attachment devices (224) extending radially from the outer surface of the second portion (218) to a second distance that is less than the first distance.

14. The shaft assembly of any preceding claim, wherein the body of the first of the plurality of attachment devices and the body of the second of the plurality of attachment devices extend radially from the longitudinal axis to substantially the same distance.

15. The shaft assembly of any preceding claim, wherein the first portion and the second portion of the elongate shaft member comprise a plurality of segmented tubular members.
